Europäisches Patentamt

European Patent Office

Office européen des brevets

(11) Veröffentlichungsnummer: **0 296 302 B1**

# (12) EUROPÄISCHE PATENTSCHRIFT

(45) Veröffentlichungstag der Patentschrift: **16.10.91**

(51) Int. Cl.5: **B29C 51/16**

(21) Anmeldenummer: **87830240.5**

(22) Anmeldetag: **25.06.87**

(54) **Anordnung zur Anbringung von selbstklebenden Etiketten auf der Aussenfläche von thermogeformten Kunststoffbehältern.**

(43) Veröffentlichungstag der Anmeldung:
**28.12.88 Patentblatt 88/52**

(45) Bekanntmachung des Hinweises auf die
Patenterteilung:
**16.10.91 Patentblatt 91/42**

(84) Benannte Vertragsstaaten:
**CH DE ES FR GB LI**

(56) Entgegenhaltungen:
**DE-A- 2 850 843**     **FR-A- 2 369 074**
**FR-A- 2 454 892**     **FR-A- 2 528 349**
**GB-A- 1 357 531**     **US-A- 4 144 010**

(73) Patentinhaber: **BENCO PACK S.p.A.**
**Via Sarmato 4**
**I-29100 Piacenza(IT)**

(72) Erfinder: **Benzoni, Angelo**
**Via V. Veneto 15/B**
**I-29100 Piacenza(IT)**

(74) Vertreter: **Porsia, Bruno et al**
**c/o Succ. Ing. Fischetti & Weber Via Caffaro 3/2**
**I-16124 Genova(IT)**

**Beschreibung**

Die Erindung betrifft eine Anordnung zur Anbringung von selbstklebenden Etiketten auf der Aussenfläche von thermogeformten Kunststoffbehältern nach dem Oberbegriff des Patentanspruchs 1.

Eine Anordnung dieser Art ist aus der DE-A-28 50 843 bekannt. Bei dieser bekannten Anordnung ist beiderseits der Thermoformungsstation je eine Etiketteneinführungsstation angeordnet und der Formenhalter mit den beiden Formvorrichtungen ist auf einer heb- und senkbaren Unterlage derart quer zur Folienbahn hin und her verschiebbar, dass, wenn eine Formvorrichtung in der Thermoformungsstation liegt, sich die andere Formvorrichtung in der zugeordneten seitlichen Etiketteneinführungsstation befindet. Bei dieser bekannten Anordnung sind also zwei Etiketteneinführungsstationen mit einem entsprechenden doppelten konstruktiven Aufwand erforderlich. Die Hohlformen der Formvorrichtungen sind unterseitig geschlossen ausgebildet, d.h. sind zusammen mit ihrem einstückig mit der betreffenden Formvorrichtung ausgebildeten Verschlussboden hin und her verschiebbar.

Eine ähnliche Anordnung ist auch aus der GB-A-1 357 531 bekannt, obwohl es sich hier nicht um in einer kontinuierlichen Folienbahn thermogeformte, sondern um spritzgegossene Kunststoffbehälter handelt, d.h. die zwischen den beiden Etiketteneinführungsstationen angeordnete Formungsstation als Spritzgusstation ausgebildet ist. Auch in dieser bekannten Anordnung werden jedoch die die Hohlformen aufweisenden Spritzguss-Formvorrichtungen zusammen mit ihren einstückig ausgebildeten Verschlussböden hin und her verschoben.

Aus der US-A-4 144 010 ist eine Anordnung bekannt, in der zwei Formvorrichtungen mit einseitig offenen Hohlformen in zwei diametral entgegengesetzten Stellungen auf einem als Karussel ausgebildeten Formhalter gelagert und durch absatzweise Drehung dieses Formhalters abwechselnd die eine in eine Formungsstation und die andere gleichzeitig in eine danebenliegende Etiketteneinführungsstation einstellbar sind. Abgesehen davon, dass hierbei das Karussel um eine waagerechte Achse gedreht wird, ist bei dieser bekannten Anordnung die Formungsstation als Spritzgusstation ausgebildet und die als Spritzgussformen ausgebildeten Formvorrichtungen sind zusammen mit den einstückig angeformten Verschlussböden ihrer Hohlformen auf dem Karussel gelagert.

Aufgabe der Erfindung ist es, eine Anordnung nach dem Oberbegriff des Patentanspruchs 1 dahingehend zu verbessern, dass das Gewicht der mit dem Karussel verdrehbaren Formvorrichtungen herabgesetzt und dadurch deren taktweise Drehung erleichtert wird. Gleichzeitig soll der konstruktive Aufwand der Gesamtanordnung herabgesetzt und die Hohlformen der in der Etikettenzuführungsstation liegenden Formvorrichtung sollen auch von unten zugänglich gemacht werden.

Diese Aufgabe wird erfindungsgemäss durch die im kennzeichnenden Teil des Patentanspruchs 1 angegebene Merkmalskombination gelöst.

Bei der erfindungsgemässen Lösung wird durch die Anordnung der Formvorrichtungen auf einem als Karussel ausgebildeten, verdrehbaren Formhalter gegenüber der bekannten Anordnung für thermogeformte Kunststoffbehälter (DE-A-28 50 843) eine Etiketteneinführungsstation eingespart und dadurch der konstruktive Aufwand entsprechend herabgesetzt. Durch die Benutzung von Formvorrichtungen mit unterseitig offenen Hohlformen und mit davon getrenntem, in der Thermoformungsstation angeordnetem Verschlussboden wird das zu bewegende Gewicht der Formvorrichtungen erheblich herabgesetzt und die Drehung des Karussels entsprechend erleichtert Gleichzeitig stellen sich die Formvorrichtungen mit unterseitig offenen Hohlformen in die Etiketteneinführungsstation ein, in welcher die Hohlformen deshalb von unten zugänglich sind.

Vorteilhafte Weiterbildungen der erfindungsgemässen Anordnung sind in den abhängigen Patentansprüchen gekennzeichnet.

Ein Ausführungsbeispiel der erfindungsgemässen Anordnung ist nachstehend in Verbindung mit den Zeichnungen näher beschrieben. Es zeigen:

Fig. 1 eine schematische Draufsicht auf eine erfindungsgemässe Anordnung.

Fig. 2 die Anordnung nach Fig. 1 in stirnseitigem Aufriss, gesehen in der Pfeilrichtung K in Fig. 1.

Fig. 3 eine schematische Draufsicht auf eine Arbeitseinheit zur Zuführung der Etiketten an ein Hohlformenpaar einer Formvorrichtung.

Fig. 4 und 5 die Anordnung im Schnitt nach der Linie IV-IV der Figuren 1 und 3 in zwei verschiedenen Arbeitsstellungen.

Fig. 6 Konstruktionseinzelheiten der Wickeldorne nach Fig. 5 zur Vorformung und Einführung der Etiketten.

Fig. 7 weitere Einzelheiten im Schnitt nach der Linie VII-VII der Fig. 6.

Fig. 8, 9, 10 und 11 eine Hohlform der Formvorrichtung im Querschnitt während der im Anschluss an Fig. 5 durchgeführten Arbeitsphasen.

Fig. 12 die Arbeitsweise von mehreren erfindungsgemässen Vorrichtungen in Verbindung mit einer Formvorrichtung, die vier Hohlformenreihen zur gleichzeitigen Thermoformung von einer entsprechenden Anzahl von Behälterreihen aufweist.

Fig. 13 und 14 einige abgewandelte Ausführungsformen der Wickeldorne in der selben schematischen Darstellung nach den Figuren 6 und 7.

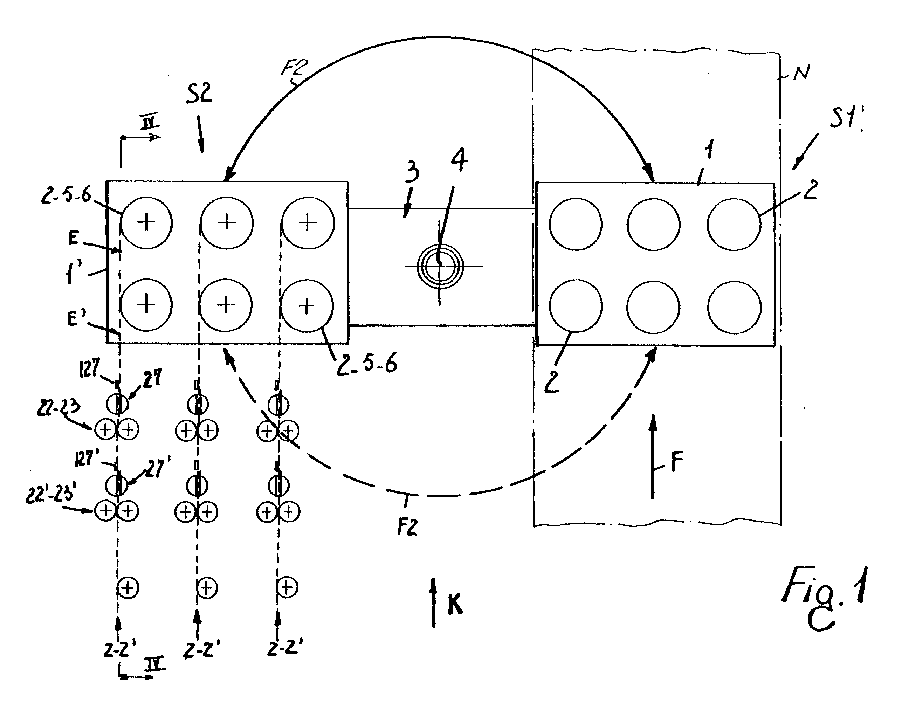

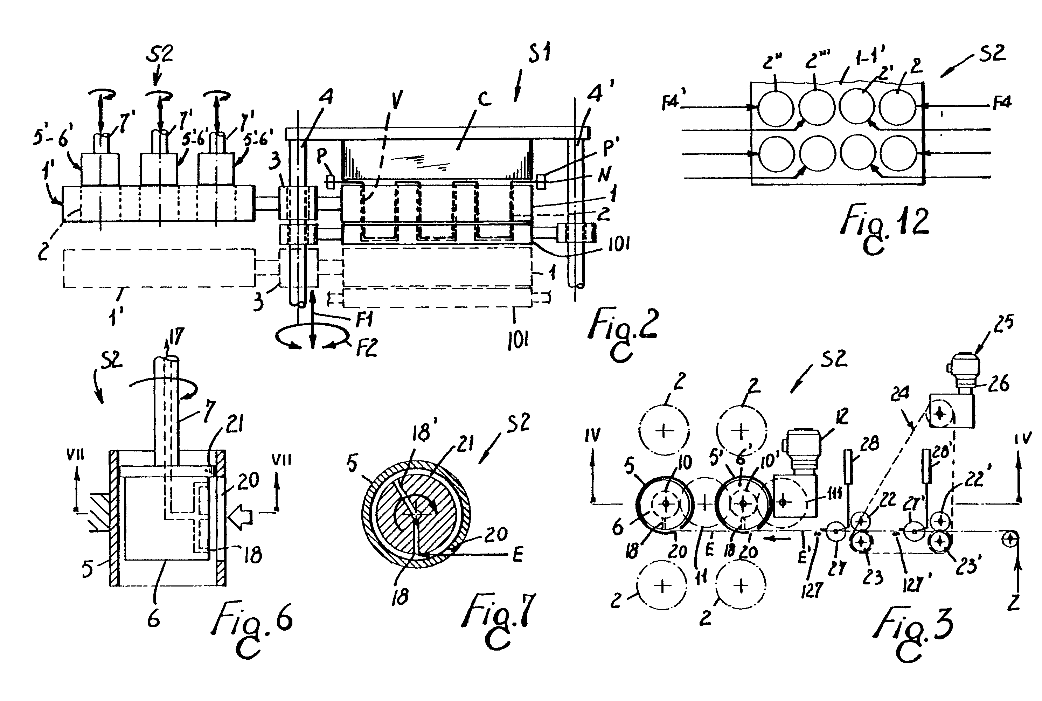

In den Figuren 1 und 2, auf die zunächst Bezug genommen werden soll, ist mit N ein waagerechter Bandabschnitt aus thermoplastischem Material bezeichnet, aus dem die Behälter hergestellt werden sollen. Der Pfeil F gibt die Richtung des taktweisen Vorschubs des Bandes N an. Mit S1 ist die Station für die Thermoformung der Behälter bezeichnet, in die abwechselnd jeweils einzeln und in richtigen Ausrichtung zwei Formvorrichtungen 1, 1' eingeschwenkt werden, die gewöhnlich untereinander gleich ausgebildet sind (siehe weiter unten) und die vertikalen Hohlformen 2 zur Thermoformung der Behälter aufweisen. Die Formvorrichtungen 1, 1' erstrecken sich in der selben waagerechten Ebene und sind konsolenartig vorspringend, symmetrisch und untereinander um 180° versetzt auf einem Karussell 3 mit vertikaler Drehachse gelagert, welch letzteres mit Hilfe von besonderen, schematisch mit den Pfeilen F1, F2 angedeuteten Mitteln um einen richtigen Hub angehoben und gesenkt sowie um 180° um seine Drehachse gedreht werden kann und zwar taktweise und in richtigen Phase zum Thermoformungsvorgang in der Station S1. Die Drehung des Karussells 3 kann eine Schwingdrehung oder eine einsinnige schrittweise Vorschaltdrehung sein. Mit 4 ist die feststehende vertikale Führung bezeichnet, auf der das Karussell 3 gesteuert achsial verschoben und gedreht werden kann.

Mit einem weiteren Bestandteil 4' kann die Führung 4 auch dazu benutzt werden, die Gegenform C in der Thermoformungsstation S1 zu halten. Auf den selben Bauteilen 4, 4' ist verschiebbar ein Element 101 gelagert, das taktweise in der Pfeilrichtung F1 und in richtiger Phase zur hin und her gehenden, vertikalen Bewegung des Karussells 3 betätigt wird und dazu bestimmt ist, unterseitig die Hohlformen 2 derjenigen Formvorrichtung 1 bzw. 1' abzuschliessen, die sich jeweils in der Thermoformungsstation S1 befindet (siehe weiter unten).

In Fig. 2 sind mit P, P' die schematisch dargestellten Greifer bezeichnet, die das Band N seitlich halten und gesteuert den Längsvorschub dieses Bandes in der Pfeilrichtung F bewirken und/oder fördern.

Die in den Formvorrichtungen 1, 1' vorgesehenen Hohlformen 2 sind untereinander gleich, haben die selbe Anzahl und die selbe Anordnung und sind durchgehend d.h. sowohl oben als auch unten offen. Wenn sich eine der Formvorrichtungen in der Thermoformungsstation S1 unterhalb des Bandes N und zwar in quer zu diesem gerichteter Stellung befindet, liegt die andere Formvorrichtung in der benachbarten Station S2 seitlich neben der Thermoformungsstrasse. In dieser seitlichen Station sind besondere, weiter unter beschriebene Mittel angeordnet, die auch in an sich bekannter Weise ausgebildet sein können und automatisch in jede Hohlform 2 der dort befindlichen Formvorrichtung von oben eine selbstklebende Etiketten einführen.

Die Wirkungsweise der derart ausgebildeten Anordnung ist einfach und offensichtlich. Wenn sich die verschiedenen Bauteile der Anordnung in den in Fig. 2 mit vollen Linien gezeichneten Stellung befinden, ist der Verschlussboden 101 angehoben und schliesst die Formvorrichtung von unten ab, in deren Hohlformen 2 die Behälter V durch plastische Verformung des Bandes N thermogeformt werden. Inzwischen werden in die Formvorrichtung 1' die Etiketten eingeführt. Nach dem Abschluss der Formung der Behälter V in der Station S1 werden das Karussell 3 und der Verschlussboden 101 soweit abgesenkt, dass das Abheben der Behälter aus den Hohlformen der Formvorrichtung 1 und der anschliessende Vorschub des Bandes N zur Durchführung eines neuen Tehrmoformungsvorgangs ermöglicht werden (siehe die in Fig. 2 gestrichelt gezeichnete Stellung der genannten Bauteile). Im Anschluss daran wird das Karussell 3 um 180° gedreht, so dass die Formvorrichtungen 1 und 1' ihre Stellung wechseln. Die Formvorrichtung 1' mit den Etiketten wird in die Station S1 überführt, während die Formvorrichtung 1 in die Station S2 befördert wird. Anschliessend wird das Karussell 3 zusammen mit dem Verschlussboden 101 angehoben und die Anordnung wiederholt ihren Arbeitszyklus mit der Thermoformung der Behälter V in den Hohlformen des Formvorrichtung 1' bei gleichzeitiger automatischer Etikettierung der geformten Behälter, während die neuen Etiketten in die Hohlformen der Formvorrichtung 1 eingeführt werden.

Die ersten und hauptsächlichsten Vorteile einer derart ausgebildeten Anordnung werden nachfolgend angeführt: Die Mittel, die die Bildung der Etiketten vornehmen und diese in die Hohlformen der jeweils in der Station S2 liegenden Formvorrichtung einführen, sind seitlich neben der Thermoformungsstrasse angeordnet und befinden sich infolgedessen in einer Stellung, in der sie vollständig und bequem für jeden beliebigen Arbeitsvorgang zugänglich sind. Während in der Station S1 die Therformung erfolgt, werden in der Station S2 die Etiketten in die Hohlformen der dort befindlichen Formvorrichtungen eingeführt. Diese zwei Arbeitsphasen können also während der selben Zeitspanne mit allen daraus folgenden Vorteilen durchgeführt werden.

Jede Formvorrichtung verbleibt in der Station S2 sowohl für die Zeitspanne des Thermoformungsvorgangs als auch für die anschliessende Zeitspanne der Entformung. Infolge der vollständigen Zugänglichkeit der Hohlformen 2 der Formvorrichtung von der Unterseite dieser Vorrichtung kann der obige lange Zeitraum auch dazu benutzt werden, die insbesondere eine unregelmässige Form aufweisenden Etiketten zu modellieren und/oder die richtige Lage del Etiketten zu überprüfen.

Die Mittel zur Bildung der Etiketten und zu ihrer anschliessenden Einführung in die Hohlformen der in der Station S2 liegenden Formvorrichtung stehen im wesentlichen fest, da die Formvorrichtung selbst angehoben wird und sich diesen Mitteln nähert (siehe weiter unten).

Der Streifen, aus dem die Etiketten gewonnen werden (siehe weiter unter), wird auf einer festgesetzten Strecke von beschränkter Länge und ohne besondere Umlenkungen geführt. Infolgedessen behält der genannte Streifen seine Elastizitätseigenschaften, die später eine satte Anlage der daraus gewonnenen Etiketten an die Hohlformenwandungen der Formvorrichtung gewährleisten.

Da das Karussell nur mit dem Gewicht der Formvorrichtungen 1, 1' und nicht mit dem Gewicht der Verschlussbodens 101 belastet ist, erfolgt auch die Drehung des Karussells leichter und einfacher.

Der Verschlussboden 101 kann zur Bildung eines unteren Teiles des Volumens und/oder der Form der Hohlformen 2 und infolgedessen auch der darin thermogeformten Behälter V beitragen. Durch eine auswechselbare Ausbildung des Verschlussbodens 101 kann die Maschine durch einfaches Auswechseln dieses Verschlussbodens 101 zur Herstellung von Behältern unterschiedlichen Fassungsvermögens und/oder unterschiedlicher Form benutzt werden. Die lange Verweilszeit jeder Formvorrichtung in der Station S2 und die vollständige Zugänglichkeit der Hohlformen 2 ermöglichen die Anordnung in der Station S2 von nicht dargestellten Mitteln, die automatisch die innere Reinigung der Hohlformen vor der Einführung der Etiketten bewirken, um eventuelle Anlagerungen von Heisssiegelstoff zu beseitigen.

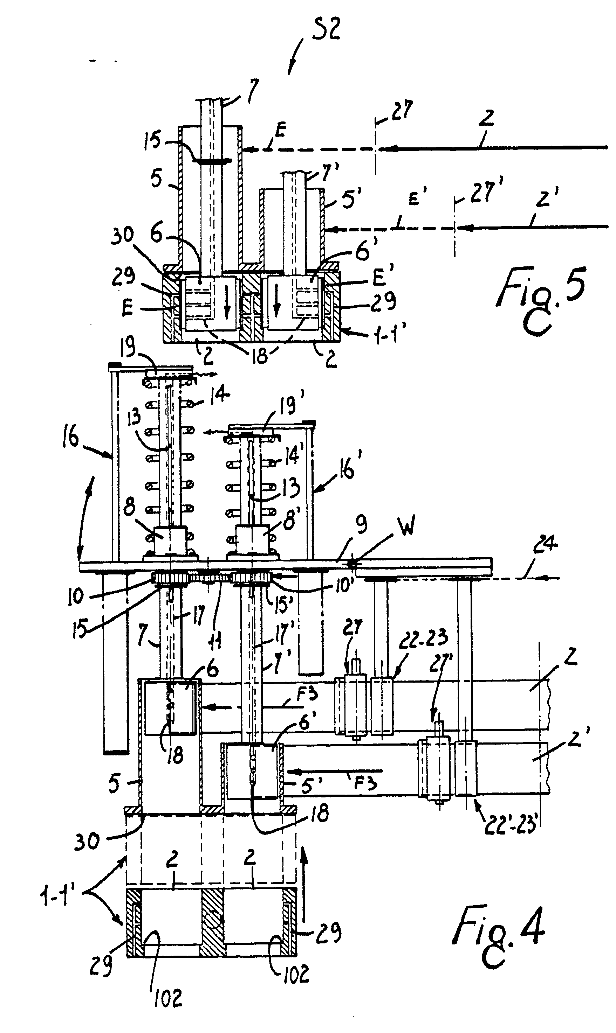

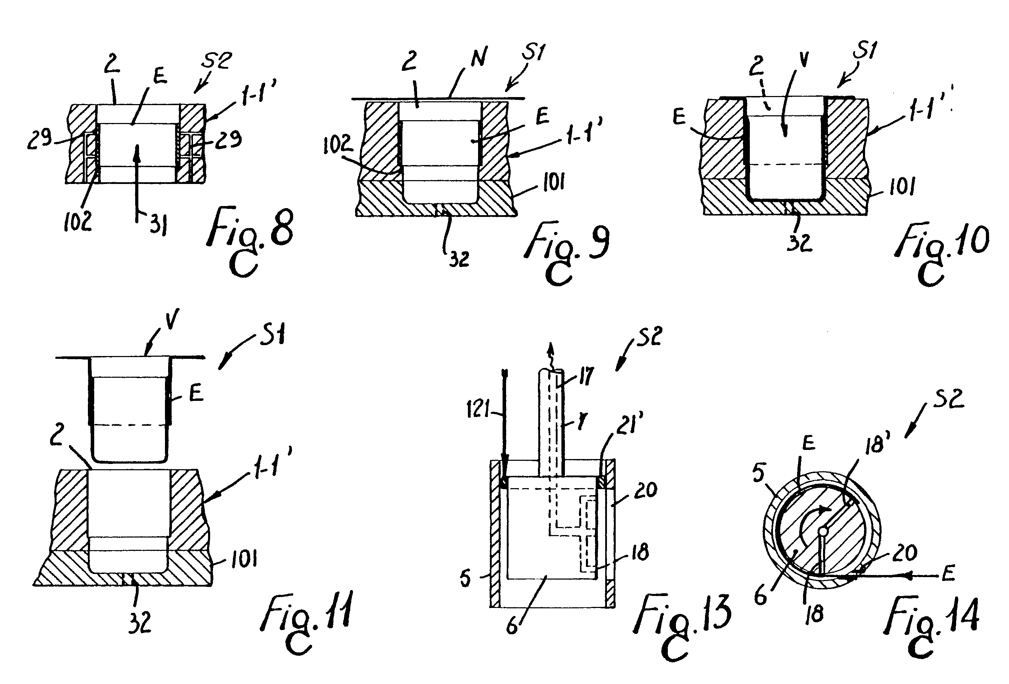

Bezugnehmend auf Fig. 4 und 5 wird nachfolgend eine bevorzugte Ausführungsform der in der Station S2 der erfindungsgemässen Anordnung wirkenden Mittel zur Bildung, Vorformung und Einführung der Etiketten beschrieben. Wenn die in der Station S2 liegenden Formvorrichtung 1 bzw. 1' angehoben wird, kommen die Hohlformen 2 dieser Formvorrichtung etwa in Berührungsanlage und in achsialer Ausrichtung mit dem unteren Teil von entsprechenden, feststehenden Büchsen 5 zu liegen, die den selben Innendurchmesser und eine vorzugsweise unterschiedliche Höhe aufweisen. Insbesondere ist es ersichtlich, dass - wenn F3 die Zuführungsrichtung der Etiketten an die genannten Mittel ist - die Büchsen 5' der dem Eintritt der Etiketten näher liegenden Reihe eine kleinere Höhe als diejenige der anderen Büchsen 5 aufweisen. Im Inneren des oberen Teils der Büchsen 5, 5' sind in achsialer Ausrichtung die entsprechenden, geeignet geformten Wickeldorne 6, 6' angeordnet, die derart untereinander gleich ausgebildet sind, dass sie gesteuert in die Hohlformen 2 der in der Station S2 liegenden Formvorrichtung eingeführt werden können. Die Wickeldorne 6, 6' sind an entsprechenden vertikalen Wellen 7, 7' befestigt, die achsial verschiebbar in entsprechenden, am feststehenden Rahmen 9 befestigten Lagern 8, 8' gelagert sind. In den Lagern 8, 8' sind auch Zahnräder 10, 10' drehbar gelagert, die untereinander gleiche Durchmesser aufweisen und untereinander unter Zwischenschaltung eines frei drehbaren Zwischenrads 11 gekuppelt sind. Die genannten Zahnräder werden von einem Getriebemotor 12 über ein weiteres Zahnrad 111 angetrieben (Fig. 3). Die Zahnräder 10, 10' sind mit Treibkeilen versehen, die in längsgerichtete Nuten 13 der Wellen 7, 7' eingreifen, um die Drehung dieser Wellen zu bewirken und ihnen trotzdem die Möglichkeit einer Achsialverschiebung zu belassen. Die Wellen 7, 7' werden z.B. durch elastische Mittel 14, 14' nach oben gedrückt und sind eventuell mit Anschlägen 16, 15' versehen , die mit Endanschlägen z.B. mit dem Körper der Zahnräder 10, 10' zusammenwirken und die Wellen in einer Ruhelage zum Stillstand bringen, in der sich die Wickeldorne 6, 6' im oberen Teil der Büchsen 5, 5' befinden. Bezugnehmend auf Fig. 4 ist es weiter ersichtlich, dass mit Hilfe der Zylinder-Kolben-Antriebe 16, 16' oder anderer Antriebsmittel die Wellen 7, 7' gesteuert mit einem unterschiedlich langen, für den weiter unten geschilderten Zweck geeigneten Hub abgesenkt werden können. Im Falle der Anordnung von solchen Antrieben können die vorstehend beschriebenen Federn 14, 14' entfallen und auch die Anschläge 15, 15' können anders angeordnet werden. Mit 17, 17' sind in den Wellen 7, 7' vorgesehene Kanäle bezeichnet, die mit auf der Mantelfläche der Wickeldorne 6, 6' in an sich bekannter Weise z.B. entlang einer Erzeugenden verteilten Löchern 18 in Verbindung stehen. Das Ganze derart, dass bei Verbindung des anderen Endes der genannten Kanäle mit einer feststehenden Saugluft- oder Druckluftquelle diese ihre Wirkung durch die genannten Löcher 18 auch während der Drehbewegung der Wickeldorne und während der Achsialbewegung dieser Wickeldorne zusammen mit den betreffenden Wellen ausüben können. Wie in Fig. 4 schematisch dargestellt ist, können die Kanäle 17, 17' am oberen Ende der Wellen 7, 7' ausmünden, wo dann Drehkupplungen 19, 19' für die Verbindung der Kanäle mit den genannten Luftquellen vorgesehen sein können.

Wie insbesondere in den Figuren 6 und 7 dargestellt ist, sind die Büchsen 5, 5' mit Längsschlitzen 20 versehen, die etwa tangential zu den entsprechenden Wickeldornen 6, 6' gerichtet sind und durch welche hindurch das zur Bildung der Etikette erforderliche Material den Wickeldornen zugeführt wird. Den Figuren 6 und 7 ist ferner zu entnehmen, dass die Wickeldorne 6, 6′ in ihrem oberen Teil einen ringförmigen Bund 21 aufweisen können, der eine Führungs- und Begrenzungfunktion für die auf der Mantelfläche der Wickeldorne zu modellierenden und vorzuformenden Etiketten ausübt (siehe weiter unten). Durch zugeordnete, nicht dargestellte, in den Bereich der Schlitze 20 der Büchsen 5, 5′ auslaufende Führungen werden den Wickeldornen 6, 6′ entsprechende Streifen Z, Z′ zugeführt, aus denen die Etiketten gewonnen werden und die auf ihrer, mit dem Wickeldorn in Berührung tretenden Seite mit einem Heisskleber versehen sind. Die Streifen Z, Z′ werden in ihrer Längsrichtung durch Paare von parallelen, übereinanderliegenden Walzen 22, 23 und 22′, 23′ (Fig. 3, 4) vorgeschoben, die durch einen zentralen Antrieb über eine zwangsläufige Bewegungsübertragung 24, z.B. über ein Ritzel und eine Kette, sowie über einen Getriebemotor 25 und eine elektromagnetische Brems-Kupplungs-Einheit 26 angetrieben werden. Von dem taktweisen Antrieb dieser Einheit wird die vorbestimmte, einsinnige, schrittweise Drehung der oben genannten Treibwalzenpaaren mit entsprechendem intermittierendem Vorschub der Streifen Z, Z′ um je einen Schritt vorbestimmter Länge abgeleitet. Im Anschluss an die Treibwalzenpaare sind an sich bekannte Trennmittel 27, 27′ vorgesehen, die gesteuert die Streifen Z, Z′ in Querrichtung durchschneiden. Mit 28, 28′ sind Antriebsmittel bezeichnet, die taktweise das Schwingmesser der genannten Trennmittel antreiben. Die entsprechenden, feststehenden, schematisch dargestellten Gegenmesser sind mit 127, 127′ bezeichnet. Der Abstand der Trennmittel 27, 27′ z.B. von den Wickeldornen 6, 6′ ist genau gleich oder im wesentlichen gleich der Länge bzw. der Abwicklung der Etiketten, die taktweise den Wickeldornen zugeführt werden sollen. Die Anordnung weist folgende Wirkungsweise auf. Am Anfang jedes Arbeitszyklus befinden sich die Wickeldorne 6, 6′ im oberen Teil der betreffenden Büchsen 5, 5′ und die Löcher 18 dieser Wickeldorne werden mit Saugluft beaufschlagt und liegen im Bereich der Schlitze 20 der Büchsen. Durch die Walzenpaare 22, 23 und 22′, 23′ werden die Streifen Z, Z′ in der Pfeilrichtung F3 längsverschoben und wenn der Anfang dieser Streifen von den Löchern 18 erfasst wird, kommen die genannten Vorschubwalzen automatisch zum Stillstand und es werden die Trennmittel 27, 27′ betätigt, so dass sich nun im Anschluss an diese Trennmittel ein Abschnitt der Streifen Z, Z′ befindet, der die erforderliche Länge zur Bildung der ETiketten aufweist, die in die Hohlformen der in der Station S2 liegenden Formvorrichtung eingeführt werden sollen. Nach dem Abtrennen wird die elektromagnetische Kupplung 26 (Fig. 3, 4) eingerückt und die Wickeldorne 6, 6′ werden infolgedessen im Uhrzeigersinn und um eine solche, Winkel gedreht, dass sich die Etiketten E, E′ um die Wickeldorne wickeln. Während dieses Vorgangs ist der Eingriff von nicht dargestellten Mitteln möglich, die die Etiketten bei ihrer Vorschubbewegung in den entsprechenden, gegen die Wickeldorne gerichteten Führungen unterstützen. Diese Mittel können z.B. Luftstrahlen oder einander gegenüberliegende, angetriebene Riemchen oder Rollen aufweisen und sind für den Fachmann leicht verständlich und ohne weiteres herstellbar. Aus Fig. 7 ist ersichtlich, dass die Wickeldorne 6, 6′ zwei Reihen von Löchern 18, 18′ aufweisen können, um sowohl den Anfang als auch das Ende der Etiketten festzuhalte,. Wenn die Etiletten E, E′ um die entsprechenden Wickeldorne herum gewickelt sind und sich die Enden der Etiketten in einer bestimmten Winkelstellung befinden, wird die Drehung der genannten Wickeldorne aufgehalten und die Anordnung ist bereit, die Etiketten in die Hohlformen 2 der darunterliegenden Formvorrichtungen zu überführen. Es ist offensichtlich, dass die Büchsen 5, 5′ mit ihrer schützenden und führenden Wirkung wesentlich zur genauen Einstellung der Etiketten auf der Mantelfläche der betreffenden Wickeldorne 6, 6′ beitragen. Die bis jetzt beschriebenen Arbeitsphasen werden während der Absenkung und des anschliessenden Anhebens des Karussells durchgeführt.

Nachdem eine Formvorrichtung 1 bzw. 1′ in die Station S2 überführt und angehoben wird, kommen deren Hohlformen etwa in Berührung mit den betreffenden Büchsen 5, 5′ und die Wickeldorne 6, 6′ mit den Etiketten werden abgesenkt und in die zugeordneten Hohlformen 2 der in der Station S2 befindlichen Formvorrichtung eingeführt, wie aus den in den Figuren 4 und 5 dargestellten, aufeinanderfolgenden Phasen zu entnehmen ist. Die von den Büchsen 5, 5 und vom Bund 21 während der Absenkbewegung der Wickeldorne ausgeübte, einschliessende bzw. begrenzende und führende Wirkung ist offensichtlich (Fig. 6,7). Der Fig. 5 ist ausserdem zu entnehmen, dass in die Hohlformen 2, 2′ der Formvorrichtung seitlich Löcher 29 einmünden können, die im richtigen Takt mit einer Saugluftquelle verbunden werden, während die Löcher 18 der Wickeldorne im richtigen Takt mit einer Druckluftquelle oder mit der Aussenluft in Verbindung gebracht werden. Die Etiketten E, E′ gehen auf Grund der elastischen Eigenschaften ihres Materials von den Wickeldornen auf die Hohlformen der Formvorrichtung über, wobei sie darin auf Grund der genannten Materialelastizität und/oder wegen der durch die eventuellen Löcher 29 ausgeübten Saugwirkung und/oder wegen der Anordnung einer unteren, vorspringenden, zur Abstützung des unteren Etikettenrands dienenden Stufe 102 der Hohlformen 2 festgehalten werden. In Verbindung damit kann auch vorgesehen sein, dass die Büchsen einen Innendurchmesser aufweisen, der etwas kleiner als derjenige der Hohlformen 2 der Formvorrichtungen ist, so dass zwischen den Teilen 2 und 4 bzw. 2′ und 4′ eine ringförmige Stufe 30 entsteht, die die Etiketten in den Hohlformen 2 festhält wenn anschliessend die Formvorrichtung abgesenkt wird und die Wickeldorne 6, 6′ in ihre obere, den Beginn des Arbeitszyklus entsprechende Ausgangsstellung zurückgeführt werden. Aus Fig. 8 ist es ersichtlich, dass nach der Einführung der Etiketten in die Hohlformen der in der Station S2 liegenden Formvorrichtung die genannten Hohlformen sowohl oben als auch unten offen sind und den Eingriff von eventuellen, schematisch mit den Pfeil 31 angedeuteten Mitteln ermöglicht, um die Etiketten zu modellieren (wenn die Hohlformen 2 eine unregelmässige Form aufweisen) und/oder um eventuell die richtige Lage der Etiketten in den Hohlformen zu kontrollieren und etwaige Unregelmässigkeiten anzuzeigen.

Fig. 9 zeigt den unteren Abschluss der Hohlformen 2 der Formvorrichtung durch den Verschlussboden 101 sobald die Formvorrichtung in die Station S1 der Thermoformung übergeführt ist. Die nächstfolgende Fig. 10 zeigt die Thermoformung der Behälter V in den mit den Etiketten versehenen Hohlformen 2, wobei die Behälter satt an die Etiketten E anliegen und die Befestigung der Etiketten auf Grund des darauf angebrachten Heissklebers bewirken. Der Verschlussboden 101 kann mit einem oder mehreren Löchern 32 zu Entlüften der Hohlformen 2 während des Thermoformungsvorgangs versehen sein. Die selben Löcher können gegebenenfalls auch zum Einblasen von Kühlluft in die Hohlformen 2 nach dem Therformungsvorgang bzw. zur Erleichterung der Entformung der thermogeformten Behälter bei der Absenkung der Formvorrichtung 1, 101 bzw. 1′, 101 (Fig. 11) benutzt werden. Aus Fig. 11 ist ausserdem ersichtlich, dass die Etikette fest mit der seitlichen Aussenfläche des Behälters V verbunden bleibt, und zwar wegen der Haftwirkung des Heissklebers, mit dem die Etikette versehen wurde.

Mit der kontrollierten Drehung der Wickeldorne 6, 6′ können die Enden der Etiketten in eine gewünschte, d.h. nicht zufällige Lage auf der Seitenfläche der Behälter gebracht werden. Wenn die Behälter paarweise an ihrem oberen Rand untereinander verbunden und in diesem Zustand verkauft werden, können die Enden der Etiketten vorteilhafterweise auf derjenigen Seitenfläche eines Behälters liegen, die gegen den daneben liegenden Behälter gerichtet ist. Infolgedessen sind die Etikettenenden bei seitlicher Betrachtung des Behälterpaares nicht sichtbar.

Wie bereits gesagt, kann die Anordnung durch Abänderung des Verschlussbodens 101 zur Herstellung von etikettierten Behältern anderer Grösse und/oder mit anders geformtem unterem Teil eingerichtet werden. Es ist jedoch selbstverständlich, dass die Formvorrichtung 1, 1′ abweichend von der beschriebenen Ausführung mit einem zusammenhängenden, einstückigen Bodenabschluss der einzelnen Hohlformen 2 ausgerüstet sein kann, und dass infolgedessen der lösbare Verschlussboden 101 wegfallen kann. In diesem Fall kann bei sonst gleicher Ausbildung der Formvorrichtung 1, 1′ vorgesehen sein, dass die unteren Abschlussteile der Hohlformen 2 untereinander verschieden sind, so dass die Maschine abwechselnd Behälter verschiedener Grösse und/oder mit verschieden geformtem unterem Teil herstellt.

Im Gegensatz zu der obigen Beschreibung ist es selbstverständlich auch möglich, dass der Abstand zwischen den Abtrennmitteln 27, 27′ und den Wickeldornen 6, 6′ von der Länge der den Wickeldornen zuzuführenden Etiketten abweicht.

Aus der Fig 12 ist es schliesslich ersichtlich, dass bei gleichzeitiger Benutzung von zwei Gruppen der in Fig. 4 bis 7 beschriebenen Mitteln zur Zuführung der Etiketten von entgegengesetzten Seiten der in der Station S2 liegenden Formvorrichtung, wie mit den Pfeilen F4, F4′ angedeutet ist, die Beschickung von Formvorrichtungen mit mehr als zwei Hohlformenreihen und eine entsprechend grössere Leistung der gesamten erfindungsgemässen Anordnung erzielt werden können, wie z.B. mit den Hohlformen 2, 2′, 2″ und 2′ ″ in Fig. 12 gezeigt ist.

Durch eine geeignete gestaffelte Anordnung der einzelnen Wickeldornreihen können in der erfindungsgemässen Einrichtung - im Gegensatz zu der in den Figuren 4 und 5 dargestellten Ausführungsform - auch mehr als zwei Wickeldornreihen mit aus einem einzigen Streifen gewonnenen Etikettenstreifen gespeist werden. Infolgedessen hat die vorstehend unter Bezugnahme auf Fig. 12 beschriebene Ausführungsform keine einschränkende Bedeutung.

Der Fig. 13 kann entnommen werden, dass in einer konstruktionsmässigen Ausführungsvariante der Erfindung der Bund 21′ durch ein ringsförmiges, vom Wickeldorn 6 getrenntes Element ersetzt werden kann, das zur wechselsinnigen achsialen Verschiebung mit schematisch angedeuteten, mit 121 bezeichneten Betätigungsmitteln verbunden ist, die diesen Ring in achsialer Richtung gegenüber den Bauteilen 5 und 6 verschieben, um aus diesen letzteren die vorgeformten Etiketten auszustossen. Die Uberführung der Etiketten von den Gruppen 5, 6 in die Hohlformen 2 der Formvorrichtung kann infolgedessen - im Gegensatz zu der bezugnehmend auf die Figuren 3 und 4 beschriebenen Ausführungsform - dadurch erfolgen, dass die Wickeldorne feststehend gehalten und nur die Ausstosser 21′ in axialer Richtung bewegt werden. Die Ausstosser können dabei eine beliebige, zu diesem Zweck geeignete Ausbildung aufweisen, die auch von der oben beschriebenen Ausführungsform abweichen kann. Vor der Betätigung des Ausstossers 21′ werden die Löcher 18 des Wickeldorns mit der Aussenluft oder mit einer Druckluftquelle verbunden.

In Fig. 14 ist ausserdem gezeigt, dass jeder Wickeldorn 6 mit zwei zueinander derart winkelverstetzten Lochreihen 18, 18′ ausgerüstet sein kann, dass sich folgende Wirkungsweise ergibt. Am Anfang jedes Arbeitszyklus stehen die Wickeldorne in der Stellung nach Fig. 14 und das Etikett E wird in Längsrichtung in die Büchse 5 eingeschoben, wo sie sich einzurollen beginnt. Wenn der Anfang des Etiketts die Löcher 18′ erreicht, werden diese Löcher und gleichzeitig auch die Löcher 18 mit der Saugluftquelle verbunden und der Wickeldorn wird in der Pfeilrichtung nach Fig. 14 gedreht, während das Etikett abgetrennt wird. Der Wickeldorn kommt zum Stillstand, wenn die ganze Etikette in die Büchse 5 eingezogen ist und wenn sich die Enden der Etikette in der vorbestimmten Winkelstellung befinden.

Bezugnehmend auf Fig. 4 wird hervorgehoben, dass in einer möglichen Ausführungsform der erfindungsgemässen Anordnung die Struktur 9, die die Wickeldorne für die Vorformung der Etiketten trägt, gesteuert aus ihrer normalen Betriebsstellung z.B. durch Verschwenkung um die Schwenkachse W angehoben werden kann, so das die Gesamtheit der verschiedenen Vorformungsmittel leicht überprüft werden kann, wenn z.B. beim Ersetzen der zur Bildung der Etiketten benutzten Rolle eventuelle Etikettenabschnitte aus den Büchsen 5 und/oder aus den verschiedenen Fördermittel entfernt werden sollen.

Ausser dem oben Gesagten ist zu bemerken, dass mit der erfindungsgemässen Anordnung noch folgende Vorteile erzielt werden:

Bei Bedarf kann die Anordnung leicht derart ausgebildet werden, dass die Etiketten entweder die ganze Seitenfläche der Behälter oder nur einen Teil davon bedecken. Durch Abänderung der Höhe der in die Formvorrichtung eingeführten Etiketten kann die Höhe des etikettierten Behälterbereichs abgeändert werden.

Da die Wickeldorne untereinander in vertikaler Richtung versetzt sind, können Wickeldorne mit sehr unregelmässiger Form benutzt werden, ohne dass sie sich gegenseitig bei der Drehung stören.

Die Vorgänge zum Anlassen und Einstellen der Maschine sind äusserst einfach.

Das Karussell 3 kann auch um 90° drehbar sein, um beide Formvorrichtungen in eine ausserhalb der Stationen liegende Stellung für Wartungs- und Reparaturarbeiten zu verschwenken. Diese Möglichkeit erlaubt di Beseitigung der in Fig. 4 dargestellten Schwenkachse W und der entsprechenden Beweglichkeit der Struktur 9, die die Gesamtheit der Wickeldorne zur Vorformung der Etiketten trägt, da diese Wickeldorne dann sowieso einfach von unten zugänglich werden. Die Maschine mit der erfindungsgemässen Anordnung weist schliesslich alle an sich bekannte Vorteile auf, die darauf beruhen, dass die Etiketten von oben in die Hohlformen der Formvorrichtung eingeführt werden, und dass zwei Formvorrichtungen vorgesehen sind, die sich einander in der Thermoformungsstation und in der Etiketteneinführungsstation abwechseln.

Selbstverständlich wurden aus der Beschreibung die baulichen Einzelheiten ausgelassen, die die Mittel zur taktweisen Drehung und zur wechselsinnigen achsialen Verschiebung des Karussells 3 und der Verschlussbodens 101 betreffen, da sie problemlos von den Fachleuten verwirklicht werden können. Aus der Beschreibung wurden auch die baulichen Einzelheiten ausgelassen, die die elektrischen Schaltungen und die Kreisläufe der Druckmedien betreffen, da auch diese Einzelheiten von den Fachleuten ohne weiteres realisierbar sind.

Es ist auch möglich, eine geeignete wechselsinnige waagerechte Bewegung der Führungsmittel für das Karussell 3 und für den Verschlussboden, sowie für die Etikettenzuführungsmittel vorzusehen.

## Patentansprüche

1. Anordnung zur Anbringung von selbstklebenden Etiketten (E) auf der Außenfläche von thermogeformten Kunststoffbehältern (V), enthaltend:

a) eine Thermoformungsstation (S1), durch die eine kontinuierliche, waagerechte, plastisch verformbare Folienbahn (N) zwischen einer darunterliegenden Formvorrichtung (1, 1′) mit obenseitig offenen Hohlformen (2) und einer darüberliegenden Gegenform (C) schrittweise durchführbar ist,

b) eine neben der Thermoformungsstation (S1) seitlich neben der Folienbahn (N) angeordnete Etiketteneinführungsstation (S2) mit Mitteln (5, 6, 7) zum Einsetzen einer mit Heißkleber versehenen Etikette (E) in die obenseitig offenen Hohlformen (2) einer darunterliegenden Formvorrichtung (1, 1′),

c) einen Formenhalter (3), der zwei Formvorrichtungen (1, 1′) trägt und sowohl in vertikaler als auch in waagerechter Richtung derart gesteuert beweglich ist, daß jede Formvorrichtung (1, 1′) in abgesenkter Lage abwechselnd in die Thermoformungsstation (S1) und in die Etiketteneinführungsstation (S2) gebracht und dabei in der Etiketteneinführungsstation (S2) gegen die darüberliegenden Mittel (5, 6, 7) zum Einsetzen einer Etikette (E) in jede Hohlform (2) in eine Aufnahmestellung der Etikette, und in der Thermoformungsstation (S1) gegen die darüberliegende Gegenform (C) in eine Stellung zur Formung der Kunststoffbehälter (V) in der Folienbahn (N) im Bereich jeder Hohlform (2) vorübergehend angehoben werden kann,

dadurch gekennzeichnet, daß

d) der bewegliche Formhalter (3) als Karussel ausgebildet und sowohl um eine zwischen der Thermoformungsstation (S1) und der Etiketteneinführungsstation (S2) angeordnete Achse (4) verdrehbar, als auch längs dieser Achse (4) verschiebbar gelagert ist,

e) die Hohlformen (2) der Formvorrichtungen (1, 1') unterseitig offen und in der Thermoformungsstation (S1) von einem dort angeordneten Verschlußboden (101) abschließbar sind, der von und zu der darüberliegenden Formvorrichtung (1, 1') bewegbar und zusammen mit dieser anhebbar und absenkbar gelagert ist.

2. Anordnung nach Anspruch 1, dadurch gekennzeichnet, daß der Verschlußboden (101), der die Hohlformen (2) der Formvorrichtungen (1, 1') in der Thermoformungsstation (S1) unterseitig abschließt, auswechselbar ist und im Bereich jeder Hohlform (2) eine Einsenkung aufweist, die den unteren Teil der betreffenden Hohlform (2) bildet.

3. Anordnung nach Anspruch 1 oder 2, dadurch gekennzeichnet, daß der Verschlußboden (101), der die Hohlformen (2) der Formvorrichtungen (1, 1') in der Thermoformungsstation (S1) unterseitig abschließt, mit Löchern (32) für die Entlüftung der Hohlformen (2) während des Thermoformungsvorgangs und/oder zum Einblasen von Luft in die Hohlformen (2) zur Abkühlung der Hohlformen und zur Erleichterung der Entformung der thermogeformten Kunststoffbehälter (V) aufweist.

4. Anordnung nach Anspruch 1, dadurch gekennzeichnet, daß in der Etiketteneinführungsstation (S2) Mittel vorgesehen sind, die von unten in die Hohlformen (2) der Formvorrichtungen (1, 1') eingreifen, um die Etiketten (E) genau zu modellieren und/oder ihre Lage zu kontrollieren.

5. Anordnung nach einem der vorgehenden Ansprüche, gekennzeichnet durch Wickeldorne (6, 6'), die koaxial über die Hohlformen (2) der in der Etiketteneinführungsstation (S2) liegenden Formvorrichtung (1, 1') angeordnet und mit seitlich ausmündenden Bohrungen (18) versehen sind, welch letztere mit einer Saugluftquelle verbunden werden, wenn die Wickeldorne gedreht werden, um seitlich um diese Dorne herum die Etikette (E) zu wickeln, die vorzugsweise durch Abtrennung von einem kontinuierlichen Streifen (Z) gewonnen und auf dem betreffenden Wickeldorn durch die genannte Saugwirkung gehalten wird, und anschliessend die Wickeldorne unter Einwirkung von zugeordneten Antriebsmitteln (16, 16') abgesenkt und in die Hohlformen (2) der Formvorrichtung (1, 1') eingeführt werden, um die Etiketten an diese Hohlformen zu übergeben, welch letztere mit seitlichen Bohrungen (29) versehen sein können, durch die ein Saugzug erzeugt wird, während gleichzeitig die seitlichen Bohrungen (18) der Wickeldorne (6, 6') vorzugsweise mit der Außenluft oder mit einer Druckluftquelle verbunden werden, wonach die Wickeldorne (6, 6') angehoben und in ihre Stellung für den Beginn des Arbeitszyklus zurückgeführt werden.

6. Anordnung nach Anspruch 5, dadurch gekennzeichnet, daß jeder Wickeldorn (6) von einer rohrförmigen, feststehenden, mit einem tangentialen Schlitz (20) für den Durchgang der Etikette (E) versehenen Büchse (5) umschlossen ist, wobei sich gegen das untere Ende dieser Büchse die Formvorrichtung (1 oder 1') legt, in deren Hohlformen (2) die Etiketten eingeführt werden sollen, und ferner der Innendurchmesser der genannten, als Schutzund Führungsmittel bei der Aufwicklung der Etiketten auf die Wickeldorne wirkenden Büchsen kleiner ist als derjenige der Hohlformen (2) der darunterliegenden Formvorrichtung (1, 1'), so daß zwischen diesen beiden Teilen eine Stufe (30) entsteht, die den Halt der Etikette in der Formvorrichtung gewährleistet, wenn der Wickeldorn wider in seine Ruhestellung angehoben wird.

7. Anordnung nach Anspruch 5 oder 6, dadurch gekennzeichnet, daß jeder Wickeldorn (6) oberseitig mit einem ringförmigen Bund (21) versehen ist, der als Führung und Anschlag für die Etikette wirkt.

8. Anordnung nach einem der Ansprüche 5 bis 7, dadurch gekennzeichnet, daß die Hohlformen (2) der Formvorrichtungen (1, 1') in ihrem unteren Teil mit einer Einschnürung versehen sind, die eine vorzugsweise ringförmige Stufe (102) bildet, auf welcher sich der untere Rand der in die Hohlform eingeführten Etikette (E) abstützt.

9. Anordnung nach einem der Ansprüche 5 bis 8, dadurch gekennzeichnet, daß die Reihen der quer zur Zuführungsrichtung der Etiketten ausgerichteten Wickeldorne in der Ausgangsstellung dieser Dorne unterschiedliche Höhenlagen annehmen, so daß sich die auf der Etikettenzuführungsseite liegende Wickeldornreihe (6') tiefer als die andere Wickeldornreihe (6) befindet und dadurch für die Wickeldorne eine gestaffelte Lage erhalten wird, die es ermöglicht, die Führungsmittel der Streifen (Z, Z'), aus denen die Etiketten gewonnen werden, dicht an die Wickeldorne heranzuführen und die Etiketten in Formvorrichtungen (1, 1') mit zwei Hohlformenreihen (2) einzuführen, wobei die Etiketten aus einem Streifen (Z) gewonnen werden, der von einer einzigen Rolle abgewickelt und zuerst in Längsrichtung und dann in Querrichtung geschnitten wird, und ferner Antriebsmittel (16, 16') vorgesehen sind, um die Wickeldorne (6, 6') mit unterschiedlicher Hublänge aus der oberen Ausgangsstellung in die untere Stellung zur Einführung der Etiketten in die Formvorrichtung (1, 1') und zurück zu bewegen.

10. Anordnung nach einem der Ansprüche 5 bis 9, dadurch gekennzeichnet, daß die Wickeldorne (6, 6') zur Vorformung der Etiketten untereinander synchronisiert sind.

11. Anordnung nach Anspruch 1, dadurch gekennzeichnet, daß die in der Etiketteneinführungsstation angeordneten Mittel (5, 6, 7) zum Einsetzen einer Etikette (E) in jede Hohlform (2) einer darunterliegenden Formvorrichtung (1, 1') aus ihrer Betriebsstellung zur Überprüfungszwecken anhebbar sind.

12. Anordnung nach Anspruch 1, dadurch gekennzeichnet, daß das die Formvorrichtungen (1, 1') tragende Karussell (3) mit Hilfe von Mitteln angetrieben wird, die es gesteuert schrittweise um je 90° drehen.

## Claims

1. An arrangement for attaching self-adhesive labels (E) to the outer surface of thermoformed synthetic plastics containers (V) and containing;
    a) a thermoforming station (S1) through which it is possible stepwisely to feed a continuous horizontal plastically deformable sheet (N) which passes between a forming means (1, 1') situated beneath it and having open topped hollow moulds (Z) and a counter-mould (C) situated above it,
    b) a label insertion station (S2) disposed alongside the thermoforming station (S1) and laterally alongside the film sheet (N), with means (5, 6, 7) for inserting a label (E) provided with a hot glue into the open topped hollow moulds (2) of a forming means (1, 1') situated underneath,
    c) a mould holder (3) carrying two forming means (1, 1') and adapted for controlled movement in both vertical and horizontal directions so that each forming means (1, 1') is brought in the lowered position alternately into the thermoforming station (S1) and into the label insertion station (S2) and capable, while in the label insertion station (S2), of being temporarily raised against the means (5, 6, 7) above it for insertion of a label (E) into each hollow mould (2) in a receiving position of the label and, in the thermoforming station (S1) of being temporarily raised against the counter-mould (C) above it, into a position for forming the synthetic plastics containers (V) in the sheet (N) in the region of each hollow mould (2), characterised in that
    d) the movable form holder (3) is constructed as a carousel and is mounted to be rotatable about an axis (4) disposed between the thermoforming station (S1) and the label insertion station (S2) while being also displaceable along this axis (4),
    e) the hollow moulds (2) of the forming means (1, 1') ore open on their under sides and, when in the thermoforming station (S1), can be closed by a closure bottom (101) disposed therein end which is mounted for movement away from and towards the forming means (1, 1') situated above it and to be raised and lowered together with the said forming means.

2. An arrangement according to claim 1, characterised in that the closure bottom (101) which closes off the under side of the hollow moulds (2) of the forming means (1, 1') in the thermoforming station (S1), is interchangeable and has in the region of each hollow mould (2) a depression which forms the bottom part of the relevant hollow mould (2).

3. An arrangement according to claim 1 or 2, characterised in that the closure bottom (101) which closes off the under side of the hollow moulds (2) of the forming means (1, 1') in the thermoforming station (S1) comprises holes (32) for venting the hollow moulds (2) during the thermoforming process and/or for the insufflation of air into the hollow moulds (2) for cooling them and to facilitate removal of the thermoformed synthetic plastics containers (V) from the moulds.

4. An arrangement according to claim 1, characterised in that there are in the label insertion station (S2) means which engage from below into the hollow moulds (2) of the forming means (1, 1') in order accurately to model and/or monitor the position of the labels (E).

5. An arrangement according to one of the preceding claims, characterised by winding mandrels (6, 6') disposed coaxially above the hollow moulds (2) of the forming means (1, 1') located in the label insertion station (S2) and which are provided with literally emerging bores (18) which latter are connected to a source of suction air when the winding mandrels are rotated in order to wind laterally around these mandrels the labels (E) which are preferably obtained by separation from a continuous strip (Z) and which are held on the relevant winding mandrel by the aforesaid suction action, after which the winding mandrels are lowered by the action of associated drive means (16, 16') and introduced into the hollow moulds (2) of the forming means (1, 1') in order to transfer the labels to these hollow moulds, which latter may be provided with lateral bores (29) through which a suction draught is generated, while at the same time the lateral bores (18) on the winding mandrels (6, 6') are preferably connected to the outside air or to a compressed air source, whereupon the winding mandrels (6, 6') are raised and returned to their position for the commencement of the working cycle.

6. An arrangement according to claim 5, characterised in that each winding mandrel (6) is enclosed by a tubular fixed bush (5) provided with a tangential slot (20) through which the label (E) can pass, the forming means (1 or 1') in whose hollow moulds (2) the labels are to be inserted, applying itself against the bottom end of this bush and in that furthermore the inside diameter of the said bushes which act as protective and guide means when the labels are being wound onto the winding mandrels being smaller than that of the hollow moulds (2) of the underlying forming means (1, 1') so that there is formed between these two parts a step (30) which guarantees the label remaining in the forming means when the winding mandrel is raised again to its inoperative position.

7. An arrangement according to claim 5 or 6, characterised in that each winding mandrel (6) is provided on top with an annular shoulder (21) which acts as a guide and abutment for the label.

8. An arrangement according to one of claims 5 to 7, characterised in that the hollow moulds (2) of the forming means (1, 1') are provided in their bottom part with a narrowing which forms a preferably annular step (102) on which is braced the bottom edge of the label (E) inserted into the hollow mould.

9. An arrangement according to one of claims 5 to 8, characterised in that the rows of winding mandrels orientated transversely to the direction of feed of the labels assume different height positions in the starting position of those mandrels so that the row of winding mandrels (6') disposed on the label feed side is lower down than the other row of winding mandrels (6) so that the winding mandrels acquire a graduated position which makes it possible for the guide means of the strips (Z, Z') from which the labels are obtained to be passed close to the winding mandrels and to insert the labels into forming means (1, 1') with two rows of hollow moulds (2), the labels being obtained from a strip (Z) which is unwound from a single roll and which is cut first in a longitudinal direction and then in a transverse direction and furthermore in that drive means (16, 16') are provided in order to move the winding mandrels (6, 6') with differing lengths of travel out of the starting position into the low position for insertion of the labels into the forming means (1, 1') and back.

10. An arrangement according to one of claims 5 to 9, characterised in that the winding mandrels (6, 6') are synchronised with one another for preforming the labels.

11. An arrangement according to claim 1, characterised in that the means (5, 6, 7) disposed in the label insertion station for the insertion of a label (E) into each hollow mould (2) in an underlying forming means (1, 1') can be raised out of their working position for examination purposes.

12. An arrangement according to claim 1, characterised in that the carousel (3) carrying the forming means (1, 1') is driven by means which rotate it in a controlled fashion in steps of 90° each.

## Revendications

1. Dispositif pour l'application d'étiquettes autocollantes (E) sur la surface extérieure de récipients en matière plastique (V) obtenu par thermoformage, contenant :

   a) un poste de thermoformage (S1), à travers lequel on peut faire passer une bande de film continue (N), horizontale et plastiquement déformable, entre un dispositif de formage (1,1') qui se trouve en dessous et qui présente des formes creuses (2) ouvertes vers le haut, et une contre-forme (C) qui se trouve au dessus,

   b) un poste d'introduction d'étiquettes (S2), qui est disposé à côté du poste de thermoformage (S1) et latéralement à côté la bande de film (N) et qui est pourvu de moyens (5,6,7) pour insérer une étiquette (E) pourvue de thermoadhésifs dans les formes creuses (2), ouvertes vers le haut, d'un dispositif de formage (1,1') qui se trouve en dessous,

   c) un porte-moule (3), qui porte deux dispositifs de formage (1,1') et qui est mobile tant direction verticale qu'en direction horizontale en étant commandé de telle sorte que chaque dispositif de formage (1,1')est amené alternativement en position abaissée dans le poste de thermoformage (S1) et dans le poste d'introduction d'étiquettes (S2), en pouvant alors être provisoirement soulevé, d'une part, dans le poste d'introduction d'étiquettes (S2), contre les moyens (5,6,7) qui se trouvent au-dessus afin d'insérer une étiquette (E) dans chaque forme creuse (2)dans une position de réception d'étiquette et, d'autre part, dans le poste de thermoformage (S1), contre la contreforme (C) qui se trouve au-dessus, dans une position permettant de former les récipients en matière plastique (V) dans la bande de film (N) dans la région de chaque forme creuse (2),

   **caractérisé**

   d) en ce que le porte-moule mobile (3) est réalisé en forme de carrousel, et est monté à la fois avec possibilité de rotation autour d'un axe (4) disposé entre le poste de thermoformage (S1) et le poste d'introduction d'étiquettes (S2), et avec possibilité de coulissement le long de cet axe (4),

   e) et en ce que les formes creuses (2) des dispositifs de formage (1,1') sont ouvertes vers le bas et peuvent être fermées, dans le poste de thermoformage (S1), par un fond d'obturation (101) qui s'y trouve et qui est monté en pouvant être éloigné et rapproché du dispositif de formage (1,1') qui se trouve au-dessus, et en pouvant être soulevé et abaissé conjointement avec ce dernier.

2. Dispositif selon la revendication 1, caractérisé en ce que le fond d'obturation (101), qui ferme vers le bas les formes creuses (2) des dispositifs de formage (1,1') dans le poste de thermoformage (S1), est interchangeable et présente, dans la région de chaque forme creuse (2), une partie renfoncée qui constitue la partie inférieure de la forme creuse (2) concernée.

3. Dispositif selon la revendication 1 ou 2, caractérisé en ce que le fond d'obturation (101), qui ferme vers le bas les formes creuses (2) des dispositifs de formage (1,1') dans le poste de thermoformage (S1), présente des orifices (32) pour la purge d'air des formes creuses (2) pendant le processus de thermoformage et/ou pour insuffler de l'air dans les formes creuses (2) afin de refroidir les formes creuses et de faciliter le démoulage des récipients en matière plastique (V) obtenus par thermoformage.

4. Dispositif selon la revendication 1, caractérisé en ce que des moyens, qui s'engagent par le bas dans les formes creuses (2) des dispositifs de formage (1,1'), sont prévus dans le poste d'introduction d'étiquettes (S2) pour modeler avec précision les étiquettes (E) et/ou pour contrôler leur position.

5. Dispositif selon l'une des revendications précédentes, caractérisé par des mandrins d'enroulement (6,6'), qui sont disposés coaxialement au-dessus des formes creuses (2) du dispositif de formage (1,1,') se trouvant dans le poste d'introduction d'étiquettes (S2), et qui sont pourvus de perçages (18) qui débouchent latéralement et sont reliés à une source d'air d'aspiration, lorsque les mandrins d'enroulement sont mis et rotation afin d'enrouler latéralement autour de ces mandrins l'étiquette (E) qui est de préférence obtenue par séparation d'une bande continue (Z) et, qui est maintenue sur le mandrin d'enroulement concerné par l'effet d'aspiration mentionné, à la suite de quoi les mandrins d'enroulement sont abaissés sous l'action de moyens d'entraînement associés (16,16') et introduits dans les formes creuses (2) du dispositif de formage (1,1'), afin de transférer les étiquettes sur ces formes creuses, ces dernières pouvant être pourvues de perçages latéraux (29) par lesquels est produit un tirage par aspiration, tandis que les perçages latéraux (18) des mandrins d'enroulement (6,6') sont, dans le même temps, reliés de préférence à l'air extérieur ou à une source d'air comprimé, à la suite de quoi les mandrins d'enroulement (6,6') sont soulevés et ramenés dans leur position pour le début du cycle de travail.

6. Dispositif selon la revendication 5, caractérisé en ce que chaque mandrin d'enroulement (6) est entouré par un manchon tubulaire (5), fixe et pourvu d'une fente tangentielle (20) pour le passage de l'étiquette (E), le dispositif de formage (1 ou 1'), dans les formes creuses (2) duquel doivent être introduites les étiquettes, s'appliquant contre l'extrémité inférieure de ce manchon, et le diamètre intérieur de ces manchons, qui jouent le rôle de moyens de protection et de guidage lors de l'enroulement des étiquettes sur les mandrins d'enroulement, étant en outre inférieur à celui des formes creuses (2) du dispositif de formage (1,1') qui se trouve en dessous, de sorte qu'un gradin (30) apparaît entre ces deux pièces, qui garantit le maintien de l'étiquette dans le dispositif de formage lorsque le mandrin d'enroulement est à nouveau soulevé dans sa position de repos.

7. Dispositif selon la revendication 6 ou 6, caractérisé en ce que chaque mandrin d'enroulement est pourvu sur le dessus d'un collet annulaire (21), qui sert de guidage et de butée pour l'étiquette.

8. Dispositif selon l'une des revendications 5 à 7, caractérisé en ce que les formes creuses (2) des dispositifs de formage (1,1') sont pourvues dans leur partie inférieure d'un rétrécissement qui forme un gradin (102) de préférence annulaire, sur lequel s'appuie le bord inférieur de l'étiquette (E) introduite dans la forme creuse.

9. Dispositif selon l'une des revendications 5 à 8, caractérisé. en ce que les rangées des mandrins d'enroulement orientés perpendiculairement à la direction d'amenée des étiquettes, prennent des positions en hauteur différentes dans la position initiale de ses mandrins, de sorte que la rangée de mandrins d' enroulement (6') qui se trouve du côté d'amenée des étiquettes se trouve plus bas que l'autre rangée (6) de mandrins d'enroulement, et qu'on obtient ainsi pour les mandrins d'enroulement une position échelonnée qui permet d'amener tout contre les mandrins d'enroulement les moyens de guidage des bandes (Z,Z') à partir desquelles sont obtenues les étiquettes, et d'introduire les étiquettes dans des dispositifs de formage (1,1') pourvus de deux rangées de formes creuses (2), les étiquettes étant obtenues à partir d'une bande (Z) qui est déroulée d'une seule bobine et qui est d'abord découpée dans le sens longitudinal puis dans le sens transversal, et des moyens d'entraînement (16, 16') étant en outre prévus afin de déplacer les mandrins d'enroulement (6,6') avec des longueurs de courses différentes de la position initiale supérieure à la position inférieure pour l'introduction des étiquettes dans le dispositif de formage (1,1'), et de ramener les mandrins à la position initiale.

10. Dispositif selon l'une des revendications 5 à 9, caractérisé en ce que les mandrins d'enroulement (6,6') pour le formage préalable des étiquettes sont mutuellement synchronisés,

11. Dispositif selon la revendication 1, caractérisé en ce que les moyens (5,6,7) qui sont disposés dans le poste d'introduction d'étiquettes afin d'insérer une étiquette (E) dans chaque forme creuse (2) d'un dispositif de formage (1,1') qui se trouve en dessous, peuvent être soulevés de leur position de service à des fins de contrôle.

12. Dispositif selon, la revendication 1, caractérisé en ce que le carrousel (3) qui porte les dispositifs de formage (1,1') est entraîné à l'aide de moyens qui permettent de le faire tourner d'une manière commandée progressive, par pas de 90°.

Fig. 1

EP 0 296 302 B1

Fig. 2

Fig. 3

Fig. 12

Fig. 6

Fig. 7

Fig.5

Fig.4

Fig.10

Fig.9

Fig.8

Fig.14

Fig.13

Fig.11